# EUROPEAN PATENT APPLICATION

(11) **EP 3 828 603 A1**
(43) Date of publication of application: **02.06.2021**
(21) Application number: 19841505.1
(22) Date of filing: 02.07.2019
(51) Int. Cl.: G02B 5/18, B29C 35/08, B29C 59/02, B29C 59/16

(54) **METHOD AND DEVICE FOR MANUFACTURING CONCAVE DIFFRACTION GRATING, AND CONCAVE DIFFRACTION GRATING**

(30) Priority: 23.07.2018 JP 2018137685
(71) Applicant: Hitachi High-Tech Corporation, Minato-ku Tokyo 105-6409 (JP)
(72) Inventor: YAEGASHI, Kenta, Tokyo 105-6409 (JP); EBATA, Yoshisada, Tokyo 105-6409 (JP); AONO, Takanori, Tokyo 100-8280 (JP)
(74) Representative: MERH-IP Matias Erny Reichl Hoffmann Patentanwälte PartG mbB
(86) International application number: PCT/JP2019/026231
(87) International publication number: WO 2020/021989

(57) **Abstract**

A method for manufacturing a concave diffraction grating is provided. The method includes the steps of: positioning a flat mold and a concave substrate such that a pressing surface, having a groove pattern of a diffraction grating, of the flat mold faces a concave surface, coated with a resin, of the concave substrate; pressing the pressing surface against the resin coated over the concave surface by pressurizing the flat mold using a fluid; and curing the resin having the groove pattern transferred thereto by being pressed by the pressing surface. This makes it possible to improve load non-uniformity and manufacture a concave diffraction grating with high surface accuracy.

## Description

### TECHNICAL FIELD

The present invention relates to a method and a device for manufacturing a concave diffraction grating, and a concave diffraction grating.

### BACKGROUND ART

A diffraction grating is an optical element used, for example, in a spectrograph included in an analytical device and divides light composed of various wavelengths (white light) into narrow wavelength bands. A diffraction grating is an element including fine grooves imprinted on an optical material surface deposited with a reflection film.

Diffraction gratings are divided into plane diffraction gratings each having a plane grating surface and concave diffraction gratings each having a spherical or toroidal grating surface. The concave diffraction gratings, unlike the plane diffraction gratings, have both a light dispersing action and an action of forming light into an image.

In a related art, to manufacture a concave diffraction grating, a master is created by forming a metal film over a curved substrate and mechanically imprinting a groove pattern on the metal film using, for example, a ruling engine, then the groove pattern is transferred to a resin or metal.

A method for manufacturing a concave diffraction grating is disclosed in Japanese Unexamined Patent Application Publication No. 2014-182301, in which a concave diffraction grating is manufactured by transferring a plane diffraction grating of silicon to an amorphous medium, then curbing the amorphous material substrate and mounting the amorphous material substrate on a curbed fixed substrate.

In Japanese Unexamined Patent Application Publication No. 2017-211466, a method for manufacturing a diffraction optical element is disclosed in which a glass substrate is pressed against a mold to, thereby, spread a resin coated over the mold, causing the mold shape to be transferred to the resin.

### CITATION LIST

### Patent Literature

Patent literature 1: Japanese Unexamined Patent Application Publication No. 2014-182301
Patent literature 2: Japanese Unexamined Patent Application Publication No. 2017-211466

### SUMMARY OF INVENTION

### Technical Problem

In the method for manufacturing a diffraction grating disclosed in Japanese Unexamined Patent Application Publication No. 2014-182301, when a device and a jig used are inclined at a time of load application, concave and convex substrates are subjected to uneven loads causing a problem that it is difficult to achieve uniform load distribution and realize a curved diffraction grating with high surface accuracy. This has been causing lowered image formation performance and stray light increases regarding concave diffraction gratings.

In the method for manufacturing a diffraction grating disclosed in Japanese Unexamined Patent Application Publication No. 2014-182301, surface accuracy is improved by holding a flat mold between concave and convex substrates. In this way, however, in order to obtain a desired radius of curvature in a state with the flat mold set on the convex substrate, it is necessary to make (radius of curvature of the concave substrate) = (radius of curvature of the convex substrate) + (thickness of the flat mold), taking into consideration the thickness of the flat mold. This makes it difficult to prepare concave and convex substrates each having a desired radius of curvature for manufacturing a toroidal diffraction grating having different radii of curvature for two mutually orthogonal axes (in horizontal and vertical directions).

In the case of the method for manufacturing a diffraction optical element disclosed in Japanese Unexamined Patent Application Publication No. 2017-211466, a mold includes a flat surface and a tapered portion and, with the method being for manufacturing a flat optical element, no consideration is given to curving a flat mold to make it fit a curved surface. Also, while the tapered portion is about 0.200 mm to 0.250 mm deep, a curved substrate for use in manufacturing a concave diffraction grating is of a radius of curvature ranging about 10 mm to 3000 mm. Thus, they obviously differ as to the shape of the concave portion and, therefore, it is difficult to apply the method to a spherical or toroidal surface.

The present invention made to solve the above problems is mainly aimed at providing a method and a device for manufacturing a concave diffraction grating which make it possible to improve load non-uniformity and manufacture a concave diffraction grating with high surface accuracy. Solution to Problem

The present invention made to solve the above problems provides a method for manufacturing a concave diffraction grating. The method includes the steps of: positioning a flat mold and a concave substrate such that a pressing surface, having a groove pattern of a diffraction grating, of the flat mold faces a concave surface, coated with a resin, of the concave substrate; pressing the pressing surface against the resin coated over the concave surface by pressurizing the flat mold using a fluid; and curing the resin having the groove pattern transferred thereto by being pressed by the pressing surface.

### Advantageous Effects of Invention

The present invention can provide a method and a device for manufacturing a concave diffraction grating which make it possible to improve load non-uniformity and manufacture a concave diffraction grating with high surface accuracy.

Other objects, configurations, actions and effects than those described above of the present invention will become apparent from the following description of embodiments.

### BRIEF DESCRIPTION OF DRAWINGS

Fig. 1A is a drawing illustrating a method for manufacturing a concave diffraction grating according to a first embodiment of the present invention.
Fig. 1B is a drawing illustrating the method for manufacturing the concave diffraction grating according to the first embodiment of the present invention.
Fig. 1C is a drawing illustrating the method for manufacturing the concave diffraction grating according to the first embodiment of the present invention.
Fig. 1D is a drawing illustrating the method for manufacturing the concave diffraction grating according to the first embodiment of the present invention.
Fig. 1E is a drawing illustrating the method for manufacturing the concave diffraction grating according to the first embodiment of the present invention.
Fig. 2 is a flowchart for manufacturing the concave diffraction grating according to the first embodiment of the present invention.
Fig. 3A is a drawing illustrating a method for manufacturing a flat mold according to the first embodiment of the present invention.
Fig. 3B is a drawing illustrating the method for manufacturing the flat mold according to the first embodiment of the present invention.
Fig. 3C is a drawing illustrating the method for manufacturing the flat mold according to the first embodiment of the present invention.
Fig. 3D is a drawing illustrating the method for manufacturing the flat mold according to the first embodiment of the present invention.
Fig. 4A is a drawing illustrating how to fix the flat mold and a jig according to the first embodiment of the present invention.
Fig. 4B is a drawing illustrating how to fix the flat mold and the jig according to the first embodiment of the present invention.
Fig. 5 is a drawing showing positions of fixation openings provided in the flat mold.
Fig. 6 is a drawing showing a spherical diffraction grating.
Fig. 7 is a drawing showing a toroidal diffraction grating.
Fig. 8A is a drawing illustrating a method for manufacturing a concave diffraction grating according to a second embodiment of the present invention.
Fig. 8B is a drawing illustrating the method for manufacturing the concave diffraction grating according to the second embodiment of the present invention.
Fig. 8C is a drawing illustrating the method for manufacturing the concave diffraction grating according to the second embodiment of the present invention.
Fig. 8D is a drawing illustrating the method for manufacturing the concave diffraction grating according to the second embodiment of the present invention.
Fig. 8E is a drawing illustrating the method for manufacturing the concave diffraction grating according to the second embodiment of the present invention.
Fig. 9 is a flowchart for manufacturing the concave diffraction grating according to the second embodiment of the present invention.

### DESCRIPTION OF EMBODIMENTS

In the following, embodiments of the present invention will be described in detail with reference to drawings, but the present invention is not limited to the following embodiments and includes, in the scope thereof, various modifications and applications within the technical concept thereof.

### First Embodiment

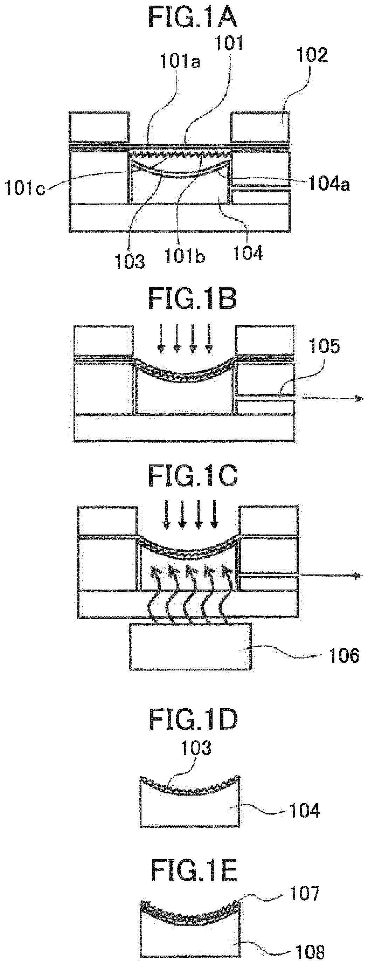

A method for manufacturing a concave diffraction grating according to a first embodiment of the present invention will be described below with reference to Figs. 1A to 1E. Figs. 1A to 1E illustrate a method for manufacturing a concave diffraction grating according to the first embodiment of the present invention.

First, in the present embodiment, a flat mold 101 and a concave substrate 104 including a concave surface 104a coated with a UV-curing resin 103 which cures when irradiated with ultraviolet rays are set on a jig 102 (see Fig. 1A). At this time, a pressing surface 101b of the flat mold 101 is positioned to face the concave surface 104a of the concave substrate 104.

Next, by exhausting from an exhaust port 105 provided in the jig 102 (for example, by sucking air using a suction device, not shown), the pressure inside the jig 102 is reduced and the flat mold 101 is caused to be pressed, while being curved, against the concave substrate 104 by the atmospheric pressure (see Fig. 1B). A groove pattern 101c which is a groove pattern of a diffraction grating is provided on the pressing surface 101b of the flat mold 101, and curving and pressing the flat mold 101 against the concave substrate 104 transfers the groove pattern 101c to the UV-curing resin 103.

In Fig. 1B, the pressing surface 101b side of the flat mold 101 is illustrated as the depressurization side and the reverse side 101a side on the back of the pressing surface 101b is illustrated as the atmospheric pressure side, but, instead of reducing the pressure on the pressing surface 101b side, the reverse side 101a side of the flat mold 101 may be pressurized. The pressurization may be effected using a gas, for example, air or other gas or using a fluid, for example, water or oil.

Next, when the UV-curing resin 103 has been shaped as desired by the pressing surface 101b of the flat mold 101, the UV-curing resin 103 is irradiated with ultraviolet rays from the bottom of the jig 102 using an ultraviolet ray irradiation device 106 (see Fig. 1C), thereby causing the UV-curing resin 103 to cure. According to the present embodiment, the flat mold 101 having the groove pattern 101c of a plane diffraction grating master is pressed, using the atmospheric pressure, against the concave substrate 104 coated with the UV-curing resin 103, and, in the pressed state, the concave substrate 104 is irradiated with ultraviolet rays causing the UV-curing resin 103 to cure.

Subsequently, the flat mold 101 and the concave substrate 104 are separated (see Fig. 1D).

Finally, a concave diffraction grating 108 is created by forming, for example, by vapor deposition, a reflection film 107, for example, of Al (aluminum) on the UV-curing resin 103 cured with the groove pattern 101c transferred thereto (see Fig. IE).

Note that the concave substrate 104 shown in Fig. 1A is made of a material (for example, synthetic silica glass or calcium fluoride) with high ultraviolet transmittance.

According to the present embodiment, as shown in Fig. 1B, the flat mold 101 is curved to fit the concave substrate 104 using the pressure difference between the pressing surface 101b side of the flat mold 101 and the reverse side 101a side thereof, so that a uniform load distribution can be achieved, making it possible to provide the concave diffraction grating 108 with high surface accuracy.

Also, according to the present embodiment, no convex substrate like the one described in Japanese Unexamined Patent Application Publication No. 2014-182301 is required, so that transferring a diffraction grating pattern to a toroidal diffraction grating or a free-form surface is also possible.

Also, according to the present embodiment, when reducing the pressure inside the jig 102, air bubbles in the UV-curing resin 103 can also be removed, so that the yield during manufacture can be improved.

Furthermore, according to the present embodiment, by applying a light-curing reaction using the UV-curing resin 103, the curing time can be reduced compared with when an existing method is used in which an adhesive (resin) is used. A light-curing resin which cures with something other than ultraviolet rays may also be used.

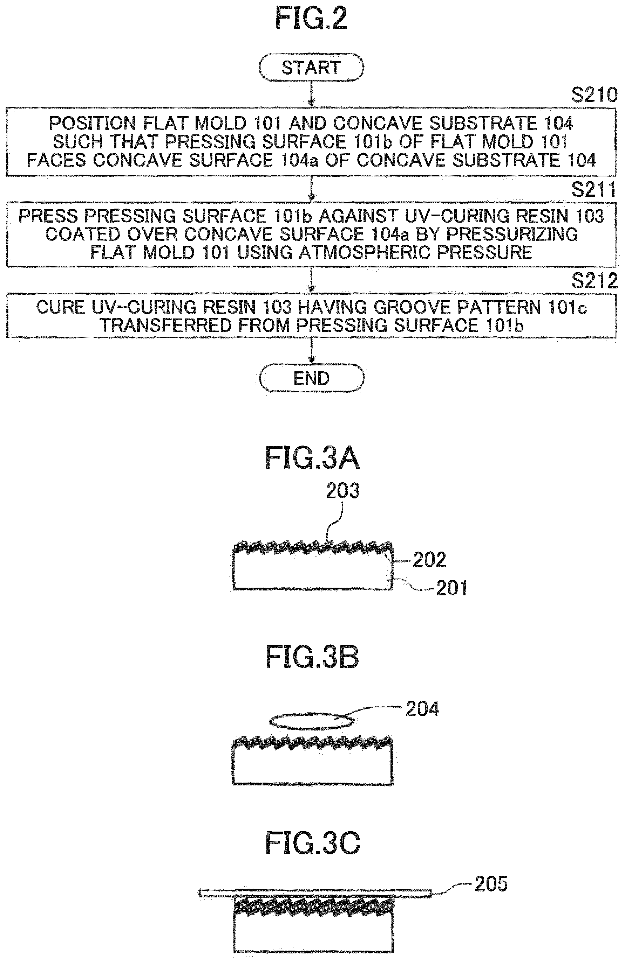

Fig. 2 is a flowchart showing a method for manufacturing the concave diffraction grating according to the first embodiment of the present invention.

First, the flat mold 101 and the concave substrate 104 are positioned such that the pressing surface 101b, having the groove pattern 101c of a diffraction grating, of the flat mold 101 faces the concave surface 104a, coated with the UV-curing resin 103, of the concave substrate 104 (step S210).

Next, by pressurizing the flat mold 101 using the atmospheric pressure, the pressing surface 101b is pressed against the UV-curing resin 103 coated over the concave surface 104a (step S211).

Next, the UV-curing resin 103 having the groove pattern 101c transferred from the pressing surface 101b pressed thereagainst is irradiated with ultraviolet rays and is thereby cured (step S212).

According to the present embodiment, load non-uniformity can be improved and a concave diffraction grating with high surface accuracy can be manufactured.

In step S211, the pressing surface 101b is pressed against the UV-curing resin 103 using, for example, the pressure difference between the pressing surface 101b side of the flat mold 101 and the reverse side 101a side of the pressing surface 101b. In this way, the pressing surface 101b can be moved toward the UV-curing resin 103 in a simple configuration.

Also, in step S211, for example, by exhausting on the pressing surface 101b side, the pressing surface 101b is caused to be pressed against the UV-curing resin 103 by the atmospheric pressure on the reverse side 101a side. In this way, the pressing surface 101b can be moved toward the UV-curing resin 103 in a simple configuration.

In step S212, the UV-curing resin 103 is caused to cure by being irradiated with ultraviolet rays using the ultraviolet ray irradiation device 106. In this way, the resin curing time can be reduced.

The concave surface 104a is a spherical or toroidal surface. This makes it possible to manufacture a concave diffraction grating having a spherical or toroidal surface.

The flat mold 101 includes a metal film 203 having the pressing surface 101b (see Figs. 3A to 3D) and a base member 205 supporting the metal film 203 (see Figs. 3A to 3D). This makes it possible to securely support the metal film 203 having the groove pattern 101c and accurately transfer the groove pattern 101c to the UV-curing resin 103.

Next, a method for manufacturing the flat mold 101 shown in Fig. 1 will be described with reference to Figs. 3A to 3D. Figs. 3A to 3D are drawings illustrating a flat mold manufacturing method according to the first embodiment of the present invention.

First, a release layer 202 and the metal film 203 are formed on a plane diffraction grating master 201 (see Fig. 3A) .

Next, an adhesive 204 is applied from above to the metal film 203 formed as shown in Fig. 3A (see Fig. 3B).

Subsequently, the base member 205 is placed over the surface coated with the adhesive 204 of the plane diffraction grating master 201, and the metal film 203 and the base member 205 are bonded together (see Fig. 3C). The base member 205 supports the metal film 203 having the pressing surface 101b. The base member 205 is, for example, a foil-like member curvable along the UV-curing resin 103 coated over the concave surface 104a of the concave substrate 104. In the present embodiment, the base member 205 is desirably of a material which reflects ultraviolet rays so as to cure the UV-curing resin 103 and, to be specific, the material may be metal, for example, aluminum or nickel, or silicon. As the base member 205 is required to be curvable, it may be made of metal such as aluminum or nickel, and silicon may also be used within a range where a yield point is not reached. The base member 205 may be an elastic member which returns to its original shape after being curved, or may be a member which maintains a curved shape.

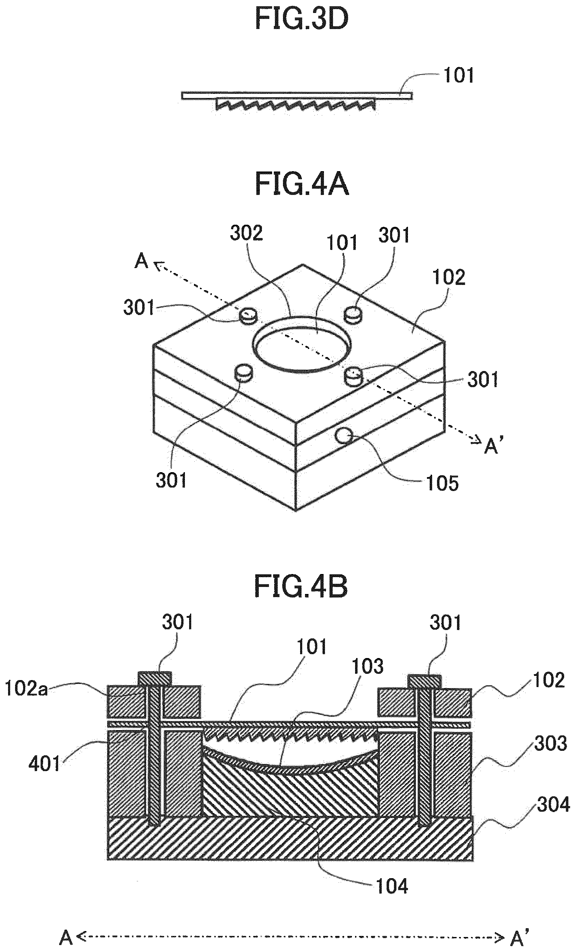

Subsequently, using the release layer 202, the metal film 203 is released from the plane diffraction grating master 201 and, thereby, the flat mold 101 is created (see Fig. 3D).

The plane diffraction grating master 201 used as shown in Fig. 3A is required to have adequate optical performance as a plane diffraction grating, but the method used to process the plane diffraction grating is not limited (the method may be, for example, a mechanical ruling method, a photolithography method, or a holographic exposure method).

In the present embodiment, the release layer 202 is provided to prevent contact between the metal film 203 and the plane diffraction grating master 201 and to thereby make the metal film easily releasable.

Next, how to fix the flat mold 101 and the jig 102 will be described with reference to Figs. 4A and 4B. Figs. 4A and 4B are drawings illustrating how to fix the flat mold and the jig according to the first embodiment of the present invention, Fig. 4A being a perspective view of a state with the flat mold 101 fixed to the jig 102 and Fig. 4B being a sectional view taken along line A-A' in Fig. 4A.

As shown in Fig. 4B, in a state with the concave substrate 104 attached to the jig 102, the flat mold 101 is set on the jig 102. The flat mold 101 includes plural fixation openings 102a and is fixed to the jig 102 by inserting fixation screws 301 through the openings 102a, then further through fixation openings 401 provided in the flat mold 101. A jig side portion 303 is required to be of a material which can fix the flat mold 101 and which is not deformed by the pressure difference between the interior and exterior of the jig 102; for example, stainless steel is used. A jig bottom portion 304 is required to be of an ultraviolet transmitting material; for example, synthetic quartz glass or calcium fluoride is used.

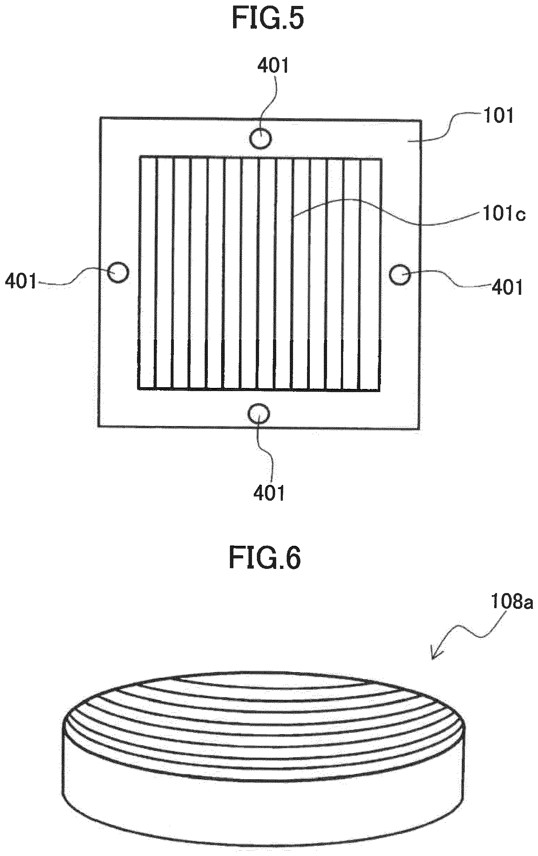

Next, the positions of the fixation openings 401 provided in the flat mold 101 will be described with reference to Fig. 5. Fig. 5 is a plan view seen from above of the flat mold 101 and shows the positions of the fixation openings 401 provided in the flat mold 101.

In the example shown in Fig. 5, a fixation opening 401 is provided in each of the four sides of the flat mold 104 that is a quadrangular plate-shaped member.

The fixation openings 401 are formed by machining, etching or laser processing. The fixation openings 401 are desirably positioned to allow the flat mold 101 and the jig 102 to be fixed together without causing the jig 102 to be deformed when screw-fastened, for example, such that, when the center of the flat mold 101 is a point of symmetry, a fixation opening 401 is positioned to be point-symmetric with another fixation opening 401 about the point.

According to the present embodiment, a spherical diffraction grating and a toroidal diffraction grating can be manufactured as the concave diffraction grating 108. Specific examples of shapes of the concave diffraction grating 108 will be described below.

Fig. 6 shows a spherical diffraction grating. The concave diffraction grating 108a shown in Fig. 6 is a spherical diffraction grating. A spherical diffraction grating is a diffraction grating having a spherical surface whose radius of curvature is uniform in the axial direction.

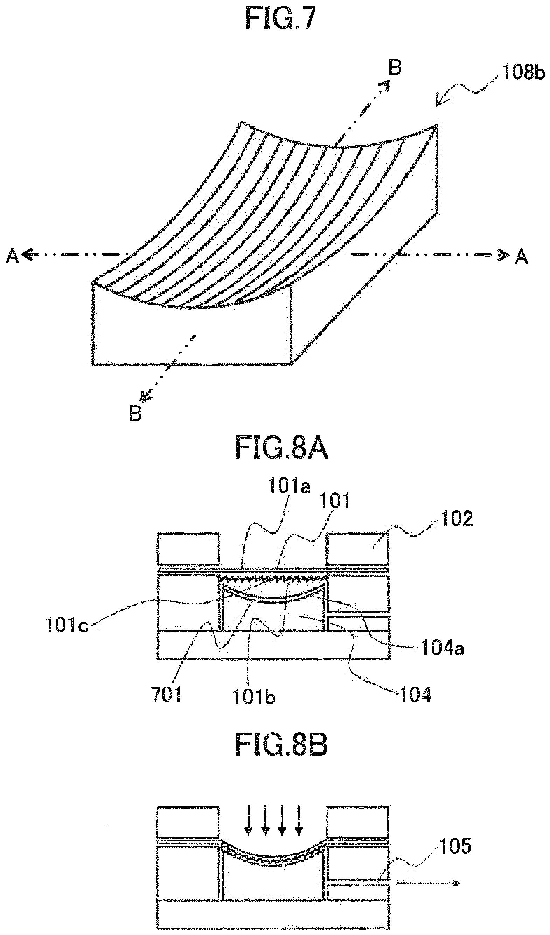

Fig. 7 shows a toroidal diffraction grating. The concave diffraction grating 108b shown in Fig. 7 is a toroidal diffraction grating. Unlike a spherical diffraction grating, a toroidal diffraction grating has a toroidal surface with radii of curvature differing between two mutually orthogonal axes. The curvature radius differs between A-A direction and B-B direction shown in Fig. 7.

Therefore, to manufacture a toroidal diffraction grating by the method disclosed in Japanese Unexamined Patent Application Publication No. 2914-182301 in which a curved diffraction grating is manufactured using concave and convex substrates to sandwich a mold, it is necessary to prepare concave and convex toroidal substrates which can be used for uniform pressing. In the case of the method shown in Fig. 1 of the present embodiment, the plane diffraction grating of the flat mold 101 is curved along the concave substrate 104 to transfer the groove pattern, so that no convex substrate is required.

The device for manufacturing a concave diffraction grating includes a positioning part (for example, the jig 102) where the flat mold 101 and the concave substrate 104 are positioned such that the pressing surface 101b, having the groove pattern 101c of a diffraction grating, of the flat mold 101 faces the concave surface 104a, coated with the UV-curing resin 103, of the concave substrate 104, a pressing part (for example, the exhaust port 105 and a suction device, not shown) which pressurizes the flat mold 101 using the atmospheric pressure and, thereby, presses the pressing surface 101b against the UV-curing resin 103 coated over the concave surface 104a, and a curing part (for example, the ultraviolet ray irradiation device 106) which irradiates the UV-curing resin 103 having the groove pattern 101c transferred from the pressing surface 101b pressed against the UV-curing resin 103 with ultraviolet rays and, thereby, cures the UV-curing resin 103.

The concave diffraction grating S108 is one manufactured by the above manufacturing method.

### Second Embodiment

In the following, a method for manufacturing a concave diffraction grating according to a second embodiment of the present invention will be described with reference to Figs. 8A to 8E. Figs. 8A to 8E illustrate a method for manufacturing a concave diffraction grating according to the second embodiment of the present invention. In the present embodiment, unlike in the first embodiment, a thermoset resin 701 which cures when heated is used as the resin for use in transferring the groove pattern 101c of the flat mold 101 to the concave substrate 104.

First, in the present embodiment, a flat mold 101 and a concave substrate 104 having a concave surface 104a coated with a thermoset resin 701 are set on a jig 102 (see Fig. 8A). At this time, a pressing surface 101b of the flat mold 101 is positioned to face the concave surface 104a of the concave substrate 104.

Next, by exhausting from the exhaust port 105 provided in the jig 102, the pressure inside the jig 102 is reduced and the flat mold 101 is caused to be pressed, while being curved, against the concave substrate 104 by the atmospheric pressure (see Fig. 8B). The groove pattern 101c that is a groove pattern of a diffraction grating is provided on the pressing surface 101b of the flat mold 101, and curving and pressing the flat mold 101 against the concave substrate 104 transfers the groove pattern 101c to the thermoset resin 701.

In Fig. 8B, the pressing surface 101b side of the flat mold 101 is illustrated as the depressurization side and the reverse side 101a side on the back of the pressing surface 101b is illustrated as the atmospheric pressure side, but, instead of reducing the pressure on the pressing surface 101b side, the reverse side 101a side of the flat mold 101 may be pressurized. The pressurization may be effected using a gas, for example, air or other gas or using a fluid, for example, water or oil.

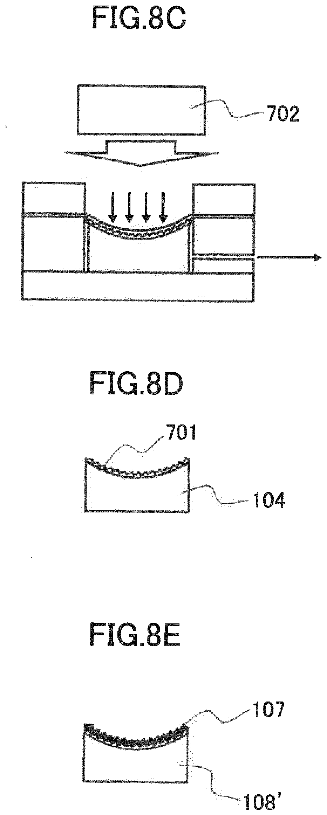

Next, when the thermoset resin 701 has been shaped as desired by the pressing surface 101b of the flat mold 101, the thermoset resin 701 is cured by heating the flat mold 101 using a heat generation device 702 from above the jig 102 (see Fig. 8C).

Subsequently, the flat mold 101 and the concave substrate 104 are separated (see Fig. 8D).

Finally, a concave diffraction grating 108' is created by forming, for example, by vapor deposition, a reflection film 107, for example, of Al (aluminum) on the thermoset resin 701 cured with the groove pattern 101c transferred thereto (see Fig. 8E).

In the present embodiment, the base member 205 of the flat mold 101 is desirably made of a material which, while not required to reflect ultraviolet rays, does not deform much when heated (having a small linear expansion coefficient). Specifically, for example, such metal as aluminum, nickel, or copper can be used.

According to the present embodiment, the thermoset resin 701 is used instead of the UV-curing resin 103 making it unnecessary to use a material with high ultraviolet transmittance for the concave substrate 104, so that the concave substrate 104 can be made of an inexpensive material to reduce the manufacturing cost.

In the present embodiment in which the thermoset resin 701 is used, too, the flat mold 101 is curved to fit the concave substrate 104 using the pressure difference between the pressing surface 101b side of the flat mold 101 and the reverse side 101a side thereof, so that a uniform load distribution can be achieved, making it possible to provide the concave diffraction grating 108' with high surface accuracy.

Also, according to the present embodiment, no convex substrate like the one described in Japanese Unexamined Patent Application Publication No. 2014-182301 is required, so that transferring a diffraction grating pattern to a toroidal diffraction grating or a free-form surface is also possible.

Also, according to the present embodiment, when reducing the pressure inside the jig 102, air bubbles in the thermoset resin 701 can also be removed, so that the yield during manufacturing can be improved.

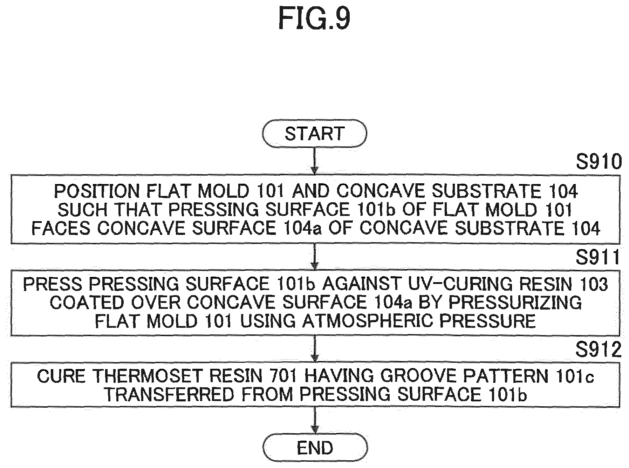

Fig. 9 is a flowchart showing a method for manufacturing a concave diffraction grating according to the second embodiment of the present invention.

First, the flat mold 101 and the concave substrate 104 are positioned such that the pressing surface 101b, having the groove pattern 101c of a diffraction grating, of the flat mold 101 faces the concave surface 104a, coated with the UV-curing resin 103, of the concave substrate 104 (step S910).

Next, by pressurizing the flat mold 101 using the atmospheric pressure, the pressing surface 101b is pressed against the thermoset resin 701 coated over the concave surface 104a (step S911).

Next, the thermoset resin 701 having the groove pattern 101c transferred from the pressing surface 101b pressed thereagainst is heated and is thereby cured (step S912).

In step S912, the heat generation device 702 is used to heat and thereby cure the thermoset resin 701. This makes it unnecessary to use an ultraviolet transmitting material as a material of the concave substrate 104, so that the manufacturing cost can be reduced by using an inexpensive material.

As described above, according to the present invention, to press a flat mold against a concave substrate, the pressure difference between the pressing surface of the flat mold and the reverse side thereof is used, so that it is possible to curve the flat mold and press with a uniform load a concave substrate and the UV-curing resin coated over the concave substrate. Therefore, load non-uniformity caused by uneven pressing, which has been a problem, can be improved, and a concave diffraction grating with high surface accuracy can be manufactured. Furthermore, without preparing concave and convex substrates, each having a toroidal surface or a free-form surface, which are difficult to create, a groove pattern provided on a flat mold can be transferred directly to a concave substrate having a toroidal surface or a free-form surface and to a UV-curing resin coated over the concave substrate. Also, using a UV-curing resin reduces the curing time compared with when an existing adhesive (resin) is used.

The present invention is not limited to the above embodiments and includes various modifications. The above embodiments have been described in detail to facilitate understanding of the present invention, and the present invention is not necessarily defined to include all the configurations described above. Furthermore, a configuration of an embodiment can be partly replaced by a configuration of another embodiment, and a configuration of an embodiment can be added to by a configuration of another embodiment. It is also possible to make a partial addition, deletion and replacement between embodiments.

### LIST OF REFERENCE SIGNS

101 ... flat mold, 102 ... jig, 103 ... UV-curing resin, 104 ... concave substrate, 105 ... exhaust port, 106 ... ultraviolet ray irradiation device, 107 ... reflection film, 108 ... concave diffraction grating, 201 ... plane diffraction grating master, 202 ... release layer, 203 ... metal film, 204 ... adhesive, 205 ... base member, 301 ... fixation screw, 302 ... jig top opening, 303 ... jig side portion, 304 ... jig bottom portion, 401 ... fixation opening, 701 ... thermoset resin, 702 ... heat generation device

## Claims

1. A method for manufacturing a concave diffraction grating, comprising the steps of:
positioning a flat mold and a concave substrate such that a pressing surface, having a groove pattern of a diffraction grating, of the flat mold faces a concave surface, coated with a resin, of the concave substrate;
pressing the pressing surface against the resin coated over the concave surface by pressurizing the flat mold using a fluid; and
curing the resin having the groove pattern transferred thereto by being pressed by the pressing surface.

2. The method for manufacturing a concave diffraction grating according to claim 1,
wherein, in the step of pressing, the pressing surface is pressed against the resin using a pressure difference between a pressing surface side of the flat mold and a reverse side of the pressing surface.

3. The method for manufacturing a concave diffraction grating according to claim 2,
wherein, in the step of pressing, the pressing surface side is exhausted, and the pressing surface is pressed against the resin using the atmospheric pressure on the reverse side.

4. The method for manufacturing a concave diffraction grating according to claim 1,
wherein the resin is a UV-curing resin, and
wherein, in the step of curing, the resin is cured by irradiation with ultraviolet rays.

5. The method for manufacturing a concave diffraction grating according to claim 1,
wherein the resin is a thermoset resin, and
wherein, in the step of curing, the resin is cured by heating.

6. The method for manufacturing a concave diffraction grating according to claim 1,
wherein the concave surface is a spherical surface or a toroidal surface.

7. The method for manufacturing a concave diffraction grating according to claim 1,
wherein the flat mold includes a metal film having the pressing surface and a base member supporting the metal film.

8. A device for manufacturing a concave diffraction grating, comprising:
a positioning part for positioning a flat mold and a concave substrate such that a pressing surface, having a groove pattern of a diffraction grating, of the flat mold faces a concave surface, coated with a resin, of the concave substrate;
a pressing part for pressing the pressing surface against the resin coated over the concave surface by pressurizing the flat mold using a fluid; and
a curing part for curing the resin having the groove pattern transferred thereto by being pressed by the pressing surface.

9. A concave diffraction grating manufactured by the method for manufacturing a concave diffraction grating according to claim 1.
